Europäisches Patentamt

European Patent Office

Office européen des brevets

(19)

(11) **EP 0 826 164 B1**

(12) **EUROPÄISCHE PATENTSCHRIFT**

(45) Veröffentlichungstag und Bekanntmachung des Hinweises auf die Patenterteilung:
**31.03.1999 Patentblatt 1999/13**

(21) Anmeldenummer: **96913414.7**

(22) Anmeldetag: **15.05.1996**

(51) Int Cl.⁶: **G02F 1/35**, H01S 3/098

(86) Internationale Anmeldenummer:
**PCT/CH96/00185**

(87) Internationale Veröffentlichungsnummer:
**WO 96/36906 (21.11.1996 Gazette 1996/51)**

(54) **OPTISCHE KOMPONENTE ZUR ERZEUGUNG GEPULSTER LASERSTRAHLUNG**

OPTICAL COMPONENT FOR GENERATING PULSED LASER RADIATION

COMPOSANT OPTIQUE POUR LA PRODUCTION D'UN RAYONNEMENT LASER PULSE

(84) Benannte Vertragsstaaten:
**CH DE FR GB IT LI**

(30) Priorität: **19.05.1995 CH 1499/95**

(43) Veröffentlichungstag der Anmeldung:
**04.03.1998 Patentblatt 1998/10**

(73) Patentinhaber: **Keller-Weingarten, Ursula**
**8049 Zürich (CH)**

(72) Erfinder:
- **KELLER-WEINGARTEN, Ursula**
  **CH-8049 Zürich (CH)**
- **KOPF, Daniel**
  **CH-8006 Zürich (CH)**

(74) Vertreter:
**Roshardt, Werner Alfred, Dipl.-Phys. et al**
**Keller & Partner**
**Patentanwälte AG**
**Zeughausgasse 5**
**Postfach**
**3000 Bern 7 (CH)**

(56) Entgegenhaltungen:
**EP-A- 0 541 304        WO-A-85/03171**
**US-A- 5 265 107**

- **APPLIED PHYSICS LETTERS, 20 MARCH 1989, USA, Bd. 54, Nr. 12, ISSN 0003-6951, Seiten 1095-1097, XP002009823 KIM B G ET AL: "Nonlinear Bragg reflector based on saturable absorption"**
- **JOURNAL OF OPTICS, MAY-JUNE 1990, FRANCE, Bd. 21, Nr. 3, ISSN 0150-536X, Seiten 111-114, XP000575363 LE SAUX G ET AL: "Non-linear response of absorbing GaAs/GaAlAs Bragg reflectors"**
- **ELECTRONICS LETTERS, 16 FEB. 1995, UK, Bd. 31, Nr. 4, ISSN 0013-5194, Seiten 287-289, XP002009825 BROVELLI L R ET AL: "Self-starting soliton modelocked Ti-sapphire laser using a thin semiconductor saturable absorber" in der Anmeldung erwähnt**
- **OPTICS LETTERS, 1 FEB. 1994, USA, Bd. 19, Nr. 3, ISSN 0146-9592, Seiten 201-203, XP000424364 SZIPOCS R ET AL: "Chirped multilayer coatings for broadband dispersion control in femtosecond lasers" in der Anmeldung erwähnt**
- **OPTICS LETTERS, 15 DEC. 1992, USA, Bd. 17, Nr. 24, ISSN 0146-9592, Seiten 1791-1793, XP000334839 JACOBOVITZ-VESELKA G R ET AL: "Broadband fast semiconductor saturable absorber"**

**Beschreibung**

Die Erfindung betrifft ein Verfahren zur Herstellung einer optischen Komponente mit vorgegebenem Reflexionsfaktor für eine Laserstrahlung, bevorzugt verwendbar für die Erzeugung kurzer Laserpulse in einem Laserresonator gemäß Anspruch 1 sowie ein Laser zur Erzeugung kurzer Pulse gemäß Anspruch 7.

Kurze Pulse im Mikro- bis Femtosekundenbereich lassen sich durch Modenkopplung, Güteschaltung oder modengekoppelte Güteschaltung innerhalb eines Laserresonators erzeugen, was mit einem in den Laserresonator eingebrachten sättigbaren Absorber erfolgen kann. Als sättigbare Absorber werden Farbstoffe oder Halbleiter verwendet, deren Absorptionsvermögen mit zunehmender Einstrahlungsintensität sinkt. Auf diese Weise erfolgt eine Kopplung der unterschiedlichen Resonatormoden zu im Resonator pendelnden kurzen Pulsen, wie z.B. auf anschauliche Art und Weise in H. Weber/ G. Herziger, Laser - Grundlagen und Anwendungen, Physik Verlag GmbH, Weinheim/Bergstr. 1972, S. 144 ff. beschrieben ist.

Sättigbare Absorber konnten nun, wie in U. Keller, "Revolution in der Erzeugung ultrakurzer Pulse", TR Transfer Nr.23, 1994, S. 22 - 24 beschrieben ist, z.B. als sog. "Antiresonant Fabry-Perot Saturable Absorber" ausgebildet werden. Bei diesen bekannten sättigbaren Absorbern wurde ein Halbleiterabsorber verwendet, der in ein etwa 400 um dickes Fabry-Perot-Interferometer mit Sandwichaufbau integriert war. Dieser Sandwich-Aufbau hatte analog zu einem Fabry-Perot (Etalon) zwei Spiegelelemente. Der Zwischenraum zwischen den beiden Spiegelelementen war mit dem sättigbar absorbierenden Halbleitermaterial ausgefüllt. Der Abstand der beiden Spiegelelemente wurde nun derart gewählt, daß die Strahlungsintensität im Inneren des Fabry-Perots stets viel kleiner war als die einfallende Intensität. D.h. das Fabry-Perot wurde in Antiresonanz betrieben. Dieser Sandwich-Aufbau ist u.a. in der EP-A 0 609 015 (US-A 5,345,454) und der EP-A 0 541 304 (US-A 5,237,577) beschrieben.

Ein weiterer sandwichartiger Aufbau eines sättigbaren Absorbers ist aus L.R. Brovelli et al., "Self-starting soliton modelocked Ti-sapphire laser using a thin saturable absorber, Electronics Letters, Vol. 31, No. 4, 1995, S. 287 - 288 bekannt. Bei dem hier beschriebenen "Sandwich-Absorber" (siehe rechte Spalte S. 287, zweitoberster Absatz) wird lediglich einer der beiden Fabry-Perot-Spiegel durch eine Antireflexionsbeschichtung, d.h. eine Antireflexionsvergütung ersetzt. Das sättigbar absorbierende Material befindet sich hier zwischen den beiden Deckelementen des Sandwichs.

Aus der US-A 5,265,107 ist ein sättigbarer Absorber bekannt, dessen sättigbar absorbierendes Schichtenensemble auf einer Silberschicht als total reflektierender Spiegel aufgebracht wird.

Bei der erfindungsgemäß hergestellten als sättigbarer Absorber wirkenden und verwendbaren, optischen Komponente werden nun nicht mehr separate einzelne, diskrete optische Elemente, wie sie bereits seit langem bekannt sind, sandwichartig unter einer Minimierung zusammengebaut, sondern es wird ein "etalonfreies" Beschichtungsensemble geschaffen, bei dem jede einzelne Schicht zusammen mit den restlichen des Ensembles zu einem phasenmäßigen Gesamtverhalten für die einfallende Strahlung beiträgt. Unter einem etalonfreien Beschichtungsensemble wird eine Beschichtung verstanden, welche kein örtlich bestimmbares Etalon aufweist. Nur durch diesen Ausgestaltungs- und dem sich daraus ergebenden Berechungsformalismus ist es möglich, eine oder mehrere Schichten, welche die sättigbar absorbierenden Eigenschaften aufweisen, derart in diesem Ensemble, natürlich unter Beachtung der phasenmäßigen Beziehungen, zu plazieren, daß eine optimale, hier eine sättigbar absorbierende Wirkung erreichbar ist.

Bei der erfindungsgemäßen Herstellung einer Beschichtung auf einer optischen Komponente ergibt sich deren gesamtes optisches Verhalten nicht mehr lediglich als Addition der Eigenschaften der einzelnen Teilschichten. Es ist zuerst das gesamte Beschichtungsensemble zu komponieren. Erst nach dessen Vorliegen kann die Eigenschaft des Ensembles (rechnerisch analog einer Filterberechnung) bestimmt werden.

Bei dem erfindungsgemäßen Herstellungsverfahren wird ein Beschichtungsensemble mit einer Schichtenvielzahl erzeugt, wobei sich hier infolge nur einer Entfernung oder einer Abänderung bereits einer einzigen Schicht das gesamte Schichtverhalten ändern kann. Im Gegensatz zum obigen Sandwich-Aufbau erfolgt hier eine matrixartige Verkopplung der gesamten Schichten miteinander, wie z.B. aus den theoretischen Ausführungen in M. Born und E. Wolf, Principles of Optics, Pergamon Press, 1975, S. 55 - 70 ersichtlich ist. Die Veränderung der physikalischen Daten einer Schicht (Ort im Ensemble, Brechungsindex, optische Schichtdicke) wirkt sich auf die Eigenschaften der Gesamtschicht aus.

Gegenüber dem bekannten sandwichartigen Aufbau können nun bei der Erfindung den optischen Komponenten durch die geeignete Bestimmung des Beschichtungsensembles Eigenschaften gegeben werden, wie sie nun gerade für einen optimalen Resonator benötigt werden. Durch die Wahl der optischen Schichtdicken und/oder dem Schichtmaterial sowie den Orten im Ensemble sind dessen Eigenschaften gezielt, wunschgemäß und somit optimal einstellbar. Es können nicht nur optische Eigenschaften berücksichtigt werden; es können auch u.a. Anforderungen an die Schichtresistenz, den genauen frequenzmäßigen Reflexionsverlauf sowie insbesondere, wie auch unten ausgeführt ist, der optimale Ort des Absorbermaterials und damit dessen optimale Wirkung ausgewählt werden.

Da sich bei der Ausführung des Beschichtungsensembles gegenüber dem bekannten Sandwich-Aufbau eine geringe Anzahl von Schichten ergibt, kann diese Beschichtung nicht nur preisgünstiger, sondern unter Ausnützung größerer Toleranzen bei den zu verwendenden optischen Schichtdicken und deren Brechungsindexes hergestellt werden. Als besonders vorteilhaft hat sich die ausgezeichnete "Designfreiheit", welche eine Vielzahl von Kombinationsmöglichkeiten im Schichtenaufbau und dessen Materialien zuläßt, erwiesen.

Der erfindungsgemäße Laser dient zur Erzeugung kurzer Pulse, insbesondere im Mikro- bis Femtosekunden-Bereich und hat wenigstens eine optische Komponente, hergestellt nach dem obigen erfindungsgemäßen Verfahren im Laserresonator. Auf der Komponentenoberfläche ist erfindungsgemäß ein optisches Beschichtungsensemble mit ersten und zweiten optischen Schichten und wenigstens einer dritten Halbleitermaterialschicht ausgebildet. Benachbarte erste und zweite Schichten haben einen unterschiedlichen optischen Brechungsindex und jede dritte Schicht ein sättigbar absorbierendes Material für die Wellenlänge der Laserstrahlung. Erste, zweite und dritte Schichten sind derart zusammen in phasengekoppelter Weise durch ihre Anordnung und ihre Schichtdicken angeordnet, daß die Komponente einen vorgegebenen Reflexionsfaktor für die Strahlung bei deren Einfall hat. Die dritte Schicht ist an einem Ort bzw. die dritten Schichten sind an Orten im Ensemble angeordnet, an dem bzw. denen eine vorgegebene normierte Intensität beim Einfall der Strahlung auf die Komponente sich ergibt.

Im folgenden werden Beispiele zur erfindungsgemäßen Herstellung einer optischen Komponente sowie deren bevorzugter Einsatz in einem erfindungsgemäßen Laser anhand der Zeichnungen näher beschrieben. Weitere Vorteile der Erfindung ergeben sich aus dem nachfolgenden Beschreibungstext. Es zeigen:

Fig. 1    einen Schnitt in Richtung der Flächennormalen durch ein beispielsweise als sättigbarer Absorber wirkendes Beschichtungsensemble,

Fig. 2    eine schematische Darstellung von Wellenwiderständen eines beliebigen Beschichtungsensembles zur Darstellung eines Berechnungsvorgangs für dessen Gesamtreflexion,

Fig. 3    der Reflexionsverlauf des in Figur 1 dargestellten Beschichtungsensembles bei senkrechtem Strahlungseinfall für Strahlung mit einer Wellenlänge im freien Raum zwischen 0,6 und 1,0 μm, wobei die absorbierende Schicht bei gleicher Gesamtensembledicke 20 nm näher an der Oberfläche und einmal 20 nm gegenüber einer Normallage weiter von dieser entfernt liegt,

Fig. 4    den normierten Intensitätsverlauf innerhalb des Beschichtungsensembles [die Lage der einzelnen dielektrischen Schichten ist gemäß **Figur 1** eingezeichnet] für Wellenlängen von 810 nm, 820 nm, 830 nm und 850 nm (freier Raum), wobei die ausgezogene Kurve die Wellenlänge der Mittelfrequenz von 830 nm des modengekoppelten Laser in einer in **Figur 5** dargestellten Anordnung zeigt,

Fig. 5    eine Darstellung eines optischen Aufbaus eines gepulsten Lasers,

Fig. 6    eine Variante zu einem in **Figur 1** dargestellten Beschichtungsensemble, mit dem neben einer sättigbaren Absorption eine negative Gruppengeschwindigkeitsdispersion erreichbar ist,

Fig. 7    eine Darstellung eines optischen Aufbaus eines modengekoppelten Lasers mit der in **Figur 6** dargestellten Komponente als Resonatorspiegel,

Fig. 8a bis 8e    unterschiedlich aufgebaute Beschichtungsensembles, wobei jeweils der **Figurenteil** α den Intensitätsverlauf **(I)** in beliebigen Einheiten über der Dicke (**z** in μm) des gesamten Ensemble, **der Figurenteil** β den Intensitätsverlauf über einen Ausschnitt aus dem Beschichtungsensemble und **der Figurenteil** Γ die Reflexion des Beschichtungsensembles über der auf der Abszisse angegebenen Wellenlänge in Mikrometern [μm],

Fig. 9    ein Beschichtungsensemble analog **Figur 1**, welches jedoch eine metallische Schicht hat,

Fig. 10    Schichten mit III-V-Halbleitermaterial und Fluoriden, was hier einen Spiegel bei einer Mittenwellenlänge von 1,4 μm ergibt,

Fig. 11    eine Variante eines Laserresonators, bei dem aktives Medium und Resonatorendspiegel ein einziges Bauteil bilden,

Fig. 12    eine weitere Variante eines Laserresonators, bei dem das aktive Medium im Resonator als Umlenkspiegel ausgebildet ist, sowie

Fig. 13          eine weitere Variante mit einem miniaturisierten Laserresonators.

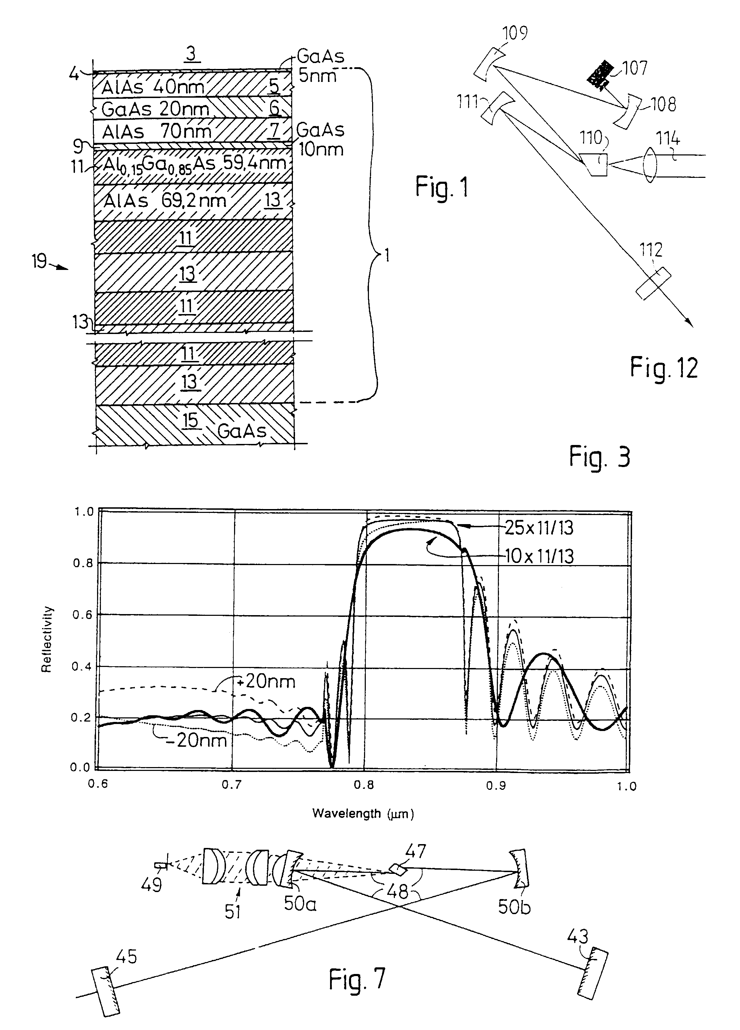

**Figur 1** zeigt in einem Schnitt durch den Schichtenaufbau eines Beschichtungsensembles **1**, welches als Reflektor und gleichzeitig als sättigbarer Absorber wirkt. Da als sättigbar absorbierendes Material hier beispielsweise ein Halbleiter, nämlich Galliumarsenid verwendet wird, sind auch für die restlichen Schichten dem Galliumarsenid im Strukturaufbau verwandte Halbleitermaterialien verwendet worden, um ein einwandfreies Aufwachsen während des Beschichtungsvorgangs (low-temperature MBE-grown bei ca. 400°C) zu erhalten.

In der Regel läßt man GaAs- und AlGaAs-Schichten enthaltende Struktur bei normalen MBE-Temperaturen von ca. 600°C aufwachsen. Bevorzugt läßt man jedoch die den sättbaren Absorber enthaltende Schicht bei tieferen Temperaturen, d. h. Zwischen 200°C und 600°C aufwachsen. Hierdurch können nämlich die Rekombinationszeiten der durch den Laserpuls erzeugten Ladungsträger beeinflußt werden und liegen dann einstellbar zwischen einigen 100 fs und einigen Nanosekungen. Diese Rekombinationszeit wird den geforderten Eigenschaften des Lasers angepaßt, wie z. B. in L.R. Brovelli et al., "Design and operation of antiresonant Fabry-Perot saturable semiconductor absorbers for mode-locked solid-state lasers", Journal of the Optical Society of America B, Vol. 12, 1995, Seite 311 - 322 ausgeführt ist. D. h. in den hier beispielsweise beschriebenen Beschichtungsensembles **1** und **42** sind lediglich die unten erwähnten Schichten **6** und **39** bei einer Temperatur von 400°C aufgewachsen.

Ausgehend von der Beschichtungsoberfläche (Grenzschicht zu Luft **3** ) weist das Beschichtungsensemble **1** eine 5 nm dicke Galliumarsenidschicht-Deckschicht **4** (GaAs), dann eine 40 nm dicke Aluminiumarsenidschicht **5** (AlAs), eine 20 nm dicke Galliumarsenidschicht **6** (GaAs) als sättigbar absorbierend wirkendes Material, eine 70 nm dicke Aluminiumarsenidschicht **7**, eine 10 nm dicke Galliumarsenidschicht **9** und dann bevorzugt 25 Doppelschichten bestehend aus einer 59,4 nm dicken mit Aluminium dotierten Galliumarsenid-schicht **11** ($Al_{15\%}Ga_{85\%}As$) und einer 69,2 nm dicken Aluminiumarsenidschicht **13** auf. Das ganze Beschichtungsensemble **1** ist auf ein Galliumarsenidsubstrat **15** aufgebracht.

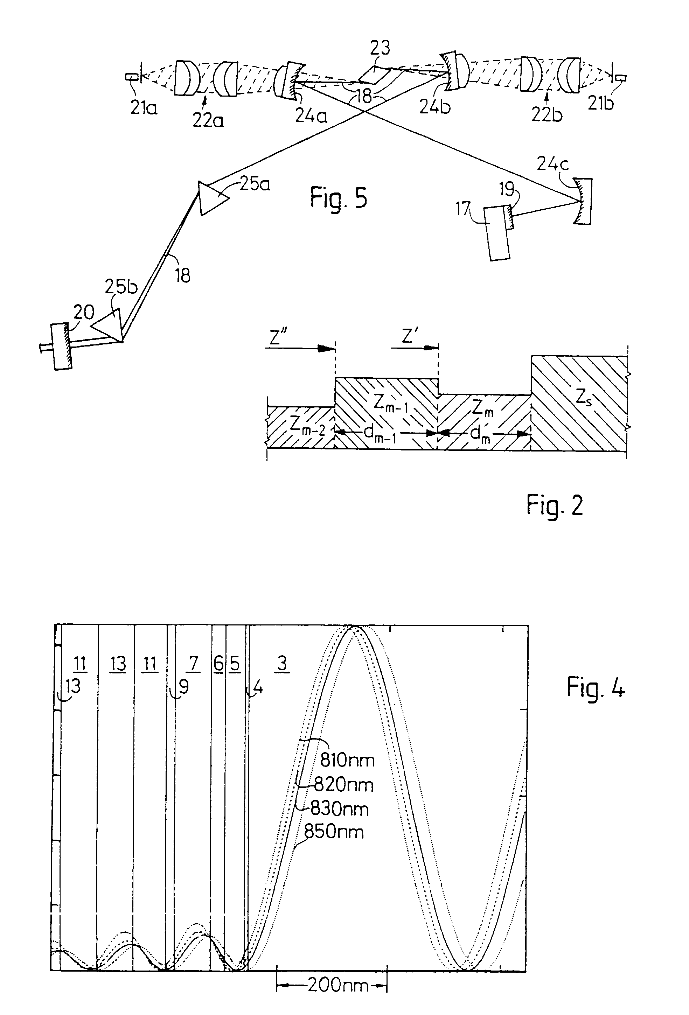

Die Berechnung der Reflexion des Beschichtungsensembles **1** erfolgt in Analogie an die Theorie der Anpassung an elektrische Wellenwiderstände nach Hermann A. Haus, Waves and Fields in Optoelectronics, 1984, Prentice-Hall Inc. Englewood Cliffs, New Jersey 07632, ISBN 0-13-946053-5, Seite 31 - 46 unter Verwendung der in **Figur 2** verwendeten Symbole.

Der Wellenwiderstand einer Schicht $Z_x$ ist der Wellenwiderstand $Z_0$ des leeren Raumes (annähernd der von Luft) dividiert durch den Brechungsindex (Quadratwurzel aus der relativen Dielektrizitätskonstanten bei einer relativen magnetischen Permeabiltät von 1, was hier in der Regel gegeben ist). Der Wellenwiderstand $Z_0$ des leeren Raumes ist etwa 376,7 $\Omega$.

Aus der elektrischen Wellentheorie ergibt sich dann für die Transformation der Wellenwiderstände

$$Z' = Z_m[Z_s/Z_m + j \tan (2\pi d_m/w_m)] / [1 + j(Z_s/Z_m)\cdot\tan(2\pi d_m/w_m)]$$

"**j**" zeigt den Imaginärteil in einer komplexen Schreibweise an,

$Z_s$ ist der Wellenwiderstand des Substrates, hier derjenige von Galliumarsenid,

$Z'$ ist der transformierte Wellenwiderstand, wie ihn eine Welle "sehen würde", die vom Wellenwiderstand $Z_s$ des Substrats durch ein Zwischenstück mit dem Wellenwiderstand $Z_m$ und der Breite $d_m$ getrennt wäre;

$w_m$ ist die Wellenlänge der betrachteten Strahlungsfrequenz im Material der Schicht mit dem Wellenwiderstand $Z_m$, d. h. mit dem betreffenden Brechungsindex $n_m$. $w_m = w_0/n_m$, wobei $w_0$ die Wellenlänge der Strahlung im freien Raum ist.

Für den Wellenwiderstand $Z''$, wie ihn nun eine Welle "sehen würde", falls ein weitere Widerstandswellenstück $Z_{m-1}$ mit einer Dicke $d_{m-1}$ vorgeschaltet wäre, gilt nun sinngemäß

$$Z''=Z_{m-1}[Z'/Z_{m-1} + j\tan (2\pi d_{m-1}/w_{m-1})] /$$

$$[1 + j(Z'/Z_{m1})\cdot\tan(2\pi d_{m-1}/w_{m-1})]$$

Die Reflexion R des gesamten Beschichtungsensembles 1 ergibt sich dann zu

$$R = [(1 - Z_{m-x}/Z^{x'})/(1 + Z_{m-x}/Z^{x'})]^2$$

wobei $Z^{x'}$ der zur Schichtoberfläche transformierte Wellenwiderstand ist und $Z_{m-x}$ der Wellenwiderstand des an die oberste Schicht angrenzenden Mediums ist, hier also von Luft. Der Reflexionsverlauf des oben beschriebenen Beschichtungsensembles **1** ist in **Figur 3** dargestellt. Die Idee ist es nun, die auf der Struktur des Beschichtungsensembles **1** beruhenden Wellenlängenabhängigkeit mit der vom absorbierenden Material gegebenen Absorption für einen vorgegebenen Wellenlängebereich zu kompensieren. Dies läßt sich durch die Wahl des richtigen Orts der Absorberschicht **6** erreichen. Zur Verdeutlichung dieser Überlegung ist der Reflexionsfaktor des Ensembles **1** bei einer Lage der Absorberschicht **6** gegenüber der in **Figur 1** dargestellten Lage einmal um 20 nm nach außen (grob gestrichelt) und einmal um 20 nm nach innen (feingestrichelt) verschoben dargestellt.Die ausgezogene Linie ist die Wellenlänge der Mittenfrequenz von 830 nm mit der der modengekoppelte Laser arbeitet.

Der Intensitätsverlauf parallel zur Flächennormalen in der Beschichtung wird aus der elektrischen Feldstärke analog zum oben beschriebenen Reflexionsfaktor berechnet, wobei auch hier die Phasenbeziehungen der Reflexionen der Teilwellen an der jeweiligen inneren Grenzflächen phasenmäßig überlagert werden müssen, wie z. B. in der oben beschriebenen Veröffentlichung von Hermann A. Haus dargelegt ist.

Der Verlauf der Intensität innerhalb des in Figur 1 dargestellten Beschichtungsensembles **1** für drei verschiedene Wellenlänge im freien Raum von 830 nm, 840 nm und 850 nm ist in **Figur 4** dargestellt. Die Wellenlängenangaben beziehen sich immer auf diejenige im freien Raum.

Eine Erzeugung von kurzen modengekoppelte Pulsen insbesondere im Subpikosekunden-Bereich ist mit der in **Figur 5a** dargestellten Anordnung optischer Komponenten möglich. Die Anordnung hat einen auf einer Wärmesenke **17** angeordnetes als Laserresonatorspiegel mit sättigbarem Absorber wirkendes Beschichtungsensemble **19**, das gemäß dem oben beschriebenen Beschichtungsensemble **1** eine maximale Reflexion bei 840 nm hat und als annähernd 100%-Spiegel mit einem 1 - 2% sättigbaren Absorber wirkt. Der andere als Auskoppelspiegel wirkende Resonatorspiegel **20** hat eine Reflexion von 98% und weist eine fachmännische Beschichtung auf, auf die hier nicht weiter eingegangen wird. Als aktives Medium dient ein Cr:LiSAF-Kristall **23** [Chrom dotierter Lithium-Strontium Aluminium Fluorid-Kristall $LiSrAlF_6$] mit 5 mm Dicke und einem Chromgehalt von 3%. Das aktive Medium wird beidseits von je einer Laserdiode **21a** sowie **21b** der Firma Applied Optronics, Typ AOC-670-400 bei einer Wellenlänge von 670 nm mit einer Leistung von 400 mW optisch gepumpt. Der Pumpstrahlengang ist in **Figur 5a** zur Unterscheidung vom ausgezogenen Resonatorstrahlengang **18** gestrichelt dargestellt. Die Strahlung der Dioden **21a** und **21b** wird mit den Abbildungssysten **22a** bzw. **22b** in das aktive Medium **23** eingestrahlt. Der Strahlengang im Resonator wird durch drei je eine konkave Reflexionsfläche aufweisende Spiegel **24a**, **24b** und **24c** (Oberflächenkrümmungsradius beträgt bei den beiden "oberen Reflexionsflächen in **Figur 5a** 10 cm und bei der unteren 20 cm) geformt und umgelenkt. Die beiden in einem Abstand von 59 cm von einander distanzierten Prismen **25a** und **25b** werden zur Erzeugung einer negativen Dispersion der Gruppengeschwindigkeit im Laserresonator verwendet. Diese negative Dispersion der Gruppengeschwindigkeit ist zur Erzeugung der obengenannten kurzen Pulse notwendig.

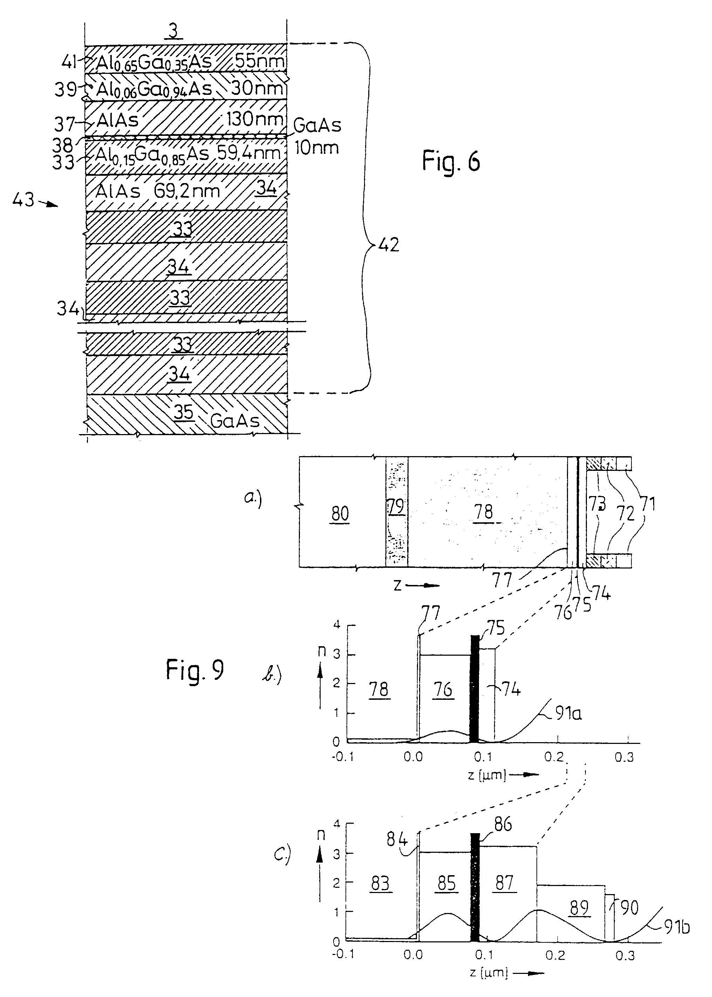

Eine Variante zu dem in **Figur 1** dargestellten Beschichtungsensemble zeigt **Figur 6**. Die Doppelschichtenfolgen **33** und **34** sowie auch das Material des Substrats **35** sind identisch zu denjenigen in **Figur 1**. Auf der Schicht **33** liegt nun eine 10 nm dicke GaAs-Schicht **38**, gefolgt von einer 130 nm dicken Zwischenschicht **37** aus Aluminiumarsenid (AlAs), dann folgt eine 30 nm dicke sättigbar absorbierende mit Aluminium dotierte Galiumarsenidschicht **39**. Die Schicht **39** besteht bevorzugt aus $Al_{6\%}Ga_{94\%}As$ und wird insbesondere mit einem sog. "low-temperature MBE-Verfahren" bei ca 400°C hergestellt. Als Deckschicht **41** dient eine 55 nm dicke Aluminium-Galliumarsenid-Schicht $AL_{65\%}Ga_{35\%}As$. Die Reflexion dieses Ensembles **42** liegt bei einer Wellenlänge von 840 nm ungesättigt bei ungefähr 98%.

Durch die Wahl der Dotierung lassen sich Galliumarsenidschichten von sättigbar absorbierenden Schichten in nicht absorbierende abhängig von der auf sie treffenden Strahlungswellenlänge einstellen. So verschiebt bei einer Dotierung von 0 bis 6% Aluminium bei der der Galliumanteil durch denjenigen des Aluminiums ersetzt wird und der Arsenanteil konstant gelassen wird, die Absorptionsgrenze von 870 nm zu 830 nm. Bei einem Aluminiumgehalt von 15% liegt die Absorptionsgrenze bereits bei 800 nm. Der Schichtenaufbau wurde nun derart gewählt, daß sich eine negative Dispersion der Gruppengeschwindigkeit der Strahlungswellen im Laserresonator ergibt. Ferner wurde darauf geachtet, daß ein gutes Aufwachsen der betreffenden Schichtung sowie eine hohe Resistenz auch bei hohen Strahlungsintensitäten gegeben ist.

Selbstverständlich können auch andere Material zusammensetzungen z. B. von $SiO_2$ und $TiO_2$ wie in R. Szipöcs et al. "Chirped multilayer coatings for broadband dispersion control in femtosecond lasers", Optics Letters, Vol. 19, No. 3, 1994, Seite 201 - 203 beschrieben ist, gewählt werden. Das von R. Szipöcs et al. beschriebene Beschichtungsensemble erzeugt jedoch lediglich nur eine negative Dispersion der Gruppengeschwindigkeit. Dieser Schichtaufbau, wie er insbesondere in der dortigen **Figur 1** dargestellt ist, muß nun noch erst aufgrund der erfinderischen Erkenntnis dahingehend abgeändert werden, daß die sättigbar absorbierenden Schichten an vorbestimmten Orten in das Beschichtungsensemble integriert werden. Mit der erfindungsgemäßen Erkenntnis lassen sich die betreffenden Schichten gezielt integrieren, so daß nicht nur eine negative Dispersion der Phasengeschwindigkeit erreichbar ist, sondern zusätzlich die Eigenschaft einer sättigbaren Absorption optimal integrierbar ist. Hierzu müssen lediglich einzelnen Schichten ohne Änderung der Phasenbeziehungen durch diejenige mit sättigbarer Absorption analog zu dem in **Figur 4** dargestellten Verlauf der Intensität über dem Schichtenaufbau ersetzt werden.

Eine Variante zu dem in der Veröffentlichung von R. Szipöcs et al. beschriebenen Beschichtungsaufbau ist in C. Fontaine et al., "Generalization of Bragg reflector geometry: Application to (Ga, Al)As-(Ca,Sr)F$_2$ reflectors", J. Appl. Phys. 68, (10), 1990, Seite 5366 - 5368 ausgeführt. In die hier dargelegten Schichtenfolgen lassen sich dann erfindungsgemäß, analog zu den obigen Ausführungen, die sättigbar absorbierende Schicht bzw. Schichten integrieren. Mit einem derartigen Aufbau sind Pulsbreiten unter 10 fs erreichbar.

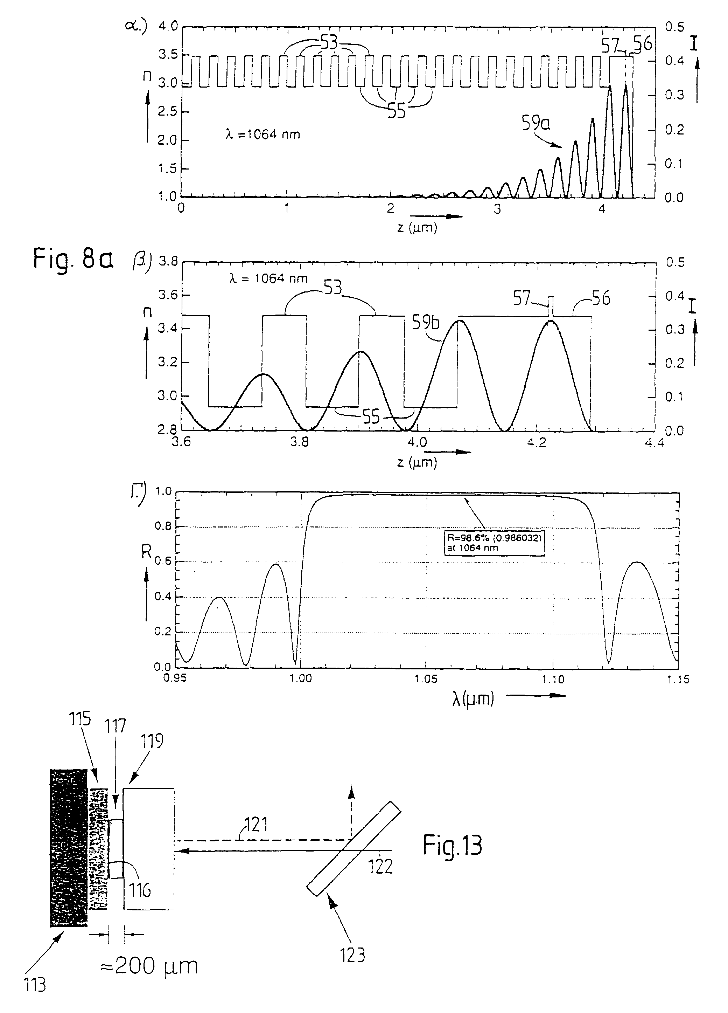

**Figur 7** zeigt die Resonatoranordnung eines modengelockten Lasers, wobei einer der Laserresonatorspiegel **43** mit dem oben beschriebenen Beschichtungsensemble **42** für eine maximale Reflexion bei 840 nm beschichtet ist und als annähernd 100%-Spiegel ausgebildet ist. Der andere als Auskoppelspiegel wirkende Resonatorspiegel **45** hat eine Reflexion von 99% und weist eine fachmännische Beschichtung auf, auf die hier nicht weiter eingegangen wird. Als aktives Medium dient ein Cr:LiSAF-Kristall **47** [Chrom dotierter Lithium-Strontium Aluminium Fluorid-Kristall LiSrAlF$_6$] mit 2 mm Dicke, so daß der Lichtweg bei Brewsterwinkel 2 mm im Kristall beträgt, und einem Chromgehalt von 3%. Das aktive Medium wird von einer Laserdiode **49** der Firma Applied Optronics, Typ AOC-670-400 bei einer Wellenlänge von 670 nm mit einer Leistung von 400 mW optisch gepumpt. Der Pumpstrahlengang ist in **Figur 7** zur Unterscheidung vom ausgezogenen Resonatorstrahlengang **48** gestrichelt dargestellt. Die Strahlung der Diode **49** wird mit dem Abbildungssystem **51** in das aktive Medium **47** eingestrahlt. Für den tatsächlichen Pumpvorgang stehen von den 400 mW dann noch etwa 300 mW zur Verfügung. Der Strahlengang im Resonator wird durch zwei je eine konkave Reflexionsfläche aufweisende Spiegel **50a** und **50b** (Oberflächenkrümmungsradius beträgt 10 cm) geformt und umgelenkt. der Abstand des Resonatorspiegels **43** beträgt 27 cm vom "Umlenkspiegel **50a** und der Abstand des Auskoppelspiegels **45** vom Umlenkspiegel **50b** 70 cm.

Bei einer Pumpleistung von 300 mW wurde eine mittlere Laserausgangsleistung von 25 mW bei Laserpulsen von 160 fs erreicht. Hervorzuheben ist bei der hier gewählten Laserresonatoranordnung der einerseits robuste Aufbau und die unkritische Justage, verglichen mit der Justage bei Verwendung eines sog. "Kerr lens modelocking". Auch kann in dieser Anordnung auf das äußerst schwer zu justierende Prismenpaar **25a** und **25b** verzichtet werden.

Anstelle einen der als Resonatorspiegel wirkenden Beschichtungsensembles **19** bzw. **43**, kann auch eine oder mehrere Oberflächen der Spiegel **20, 45, 24a, 24b, 24c, 50a** oder **50b** eine analoge, jedoch dann nicht reflektierende Ensemblebeschichtung aufweisen.

Anstelle die obenbeschriebenen Beschichtungsensembles als Reflektoren auszubilden, können sie auch als Antireflektore ausgebildet sein und dann direkt z. B. auf eine oder beide Seitenflächen des aktiven Mediums bzw. einer oder mehreren Flächen der Prismen **25a** und/oder **25b** sowie anderer hier nicht dargestellter optischer Komponeten innerhalb des Laserresonators in dessen Strahlengang aufgebracht werden.

Anstelle nur einer einzigen sättigbar absorbierenden Schicht **6** bzw. **39** im Beschichtungsensemble **1** bzw. **42** können selbstverständlich auch mehrere dieser Schichten vorhanden sein. Sie müssen nur an analogen Orten betreffend der Strahlungsintensität innerhalb des Ensembles (siehe **Figur 4**) liegen.

Neben den obenerwähnten Gallium, Arsen und Aluminium enthaltenden Halbleitermaterialien können selbstverständlich auch andere Halbleitermaterialien, wie z. B. die auf der Basis von Indium, Phosphor, Fluoriden (CaF$_2$, BaF$_2$, ...) verwendet werden.

Die **Figuren 8a** bis **8e** zeigen Beispiele unterschiedlicher Beschichtungsensembles als Varianten zu denjenigen der **Figuren 1** und **6**. Die Breite der einzelnen Schichten ist aus der "Rechteckkurve" in den jeweiligen **Teilabbildungen** α und β ersichtlich. Zur Unterscheidung der jeweiligen Schicht ist deren Brechungsindex **n** aufgetragen. Es sind alternierend Schichten **53** aus GaAs mit einem Brechungsindex von n ≈ 3,5 und Schichten **55** aus AlAs mit einem Brechungsindex von n ≈ 2,95 vorhanden. Die Beschichtungsensembles der **Figuren 8a** bis **8e** unterscheiden sich voneinander in den obersten drei Schichten. Als "oben" wird das freie Beschichtungsende - der Übergang zur Luft - bezeichnet. Die unterste **Teilabbildung** Γ zeigt jeweils den Verlauf der Reflexion **R** des betreffenden gesamten Beschichtungsensembles über der Wellenlänge Lambda in Mikrometer (μm) der einfallenden Strahlung.

In **Figur 8a** ist die oberste Schicht **56** eine GaAs-Schicht mit einer optischen Schichtdicke einer Halbwellenlänge bezogen auf 1,064 μm (Freiraumwellenlänge), welche eine Absorberteilschicht **57** aus InGaAs mit einem Brechungsindex von n ≈ 3,6 enthält. Als Freiraumwellenlänge wird die Wellenlänge im freien Raum (Vakuum) verstanden. In der betreffenden Schicht ändert sich jedoch gemäß dem vorhandenen Brechungsindex der Wert der Wellenlänge entsprechend. Die Lage der Absorberteilschicht **57** ist derart gewählt, daß sie im Maximum des Intensitätsverlaufs einer Resonatorwelle liegt. Diese Lage sowie den gesamten normierten Intensitätsverlauf 59a der Laserresonatorwelle im Beschichtungsensemble zeigt die **Teilabbildung** α der **Figur 8a**. Eine in bezug auf die Beschichtungsdickenabmessungen vergrößerte Darstellung für die oberen Beschichtungsteilschichten zeigt die **Teilabbildung** β in **Figur 8a**. Hier ist analog zur Teilabbildung α der Intensitätsverlauf mit **59b** angegeben.

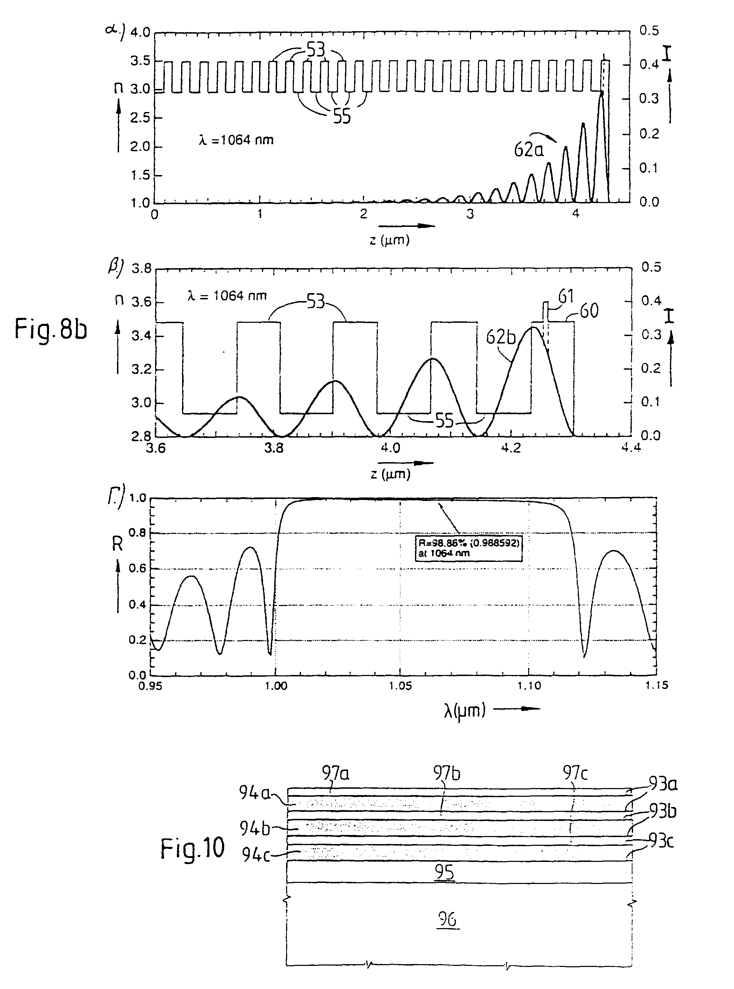

Ein zu **Figur 8a** analoges Beschichtungsensemble zeigt **Figur 8b**, wobei hier jedoch die oberste Schicht **60** eine GaAs-Schicht mit der optischen Schichtdicke einer Viertelwellenlänge bezogen auf 1,064 µm ist. Die absorbierende Schicht **61** liegt hier ebenfalls in dieser Schicht **60**, jedoch am Ort einer bereits abfallenden Intensität **62a** bzw. **62b**.

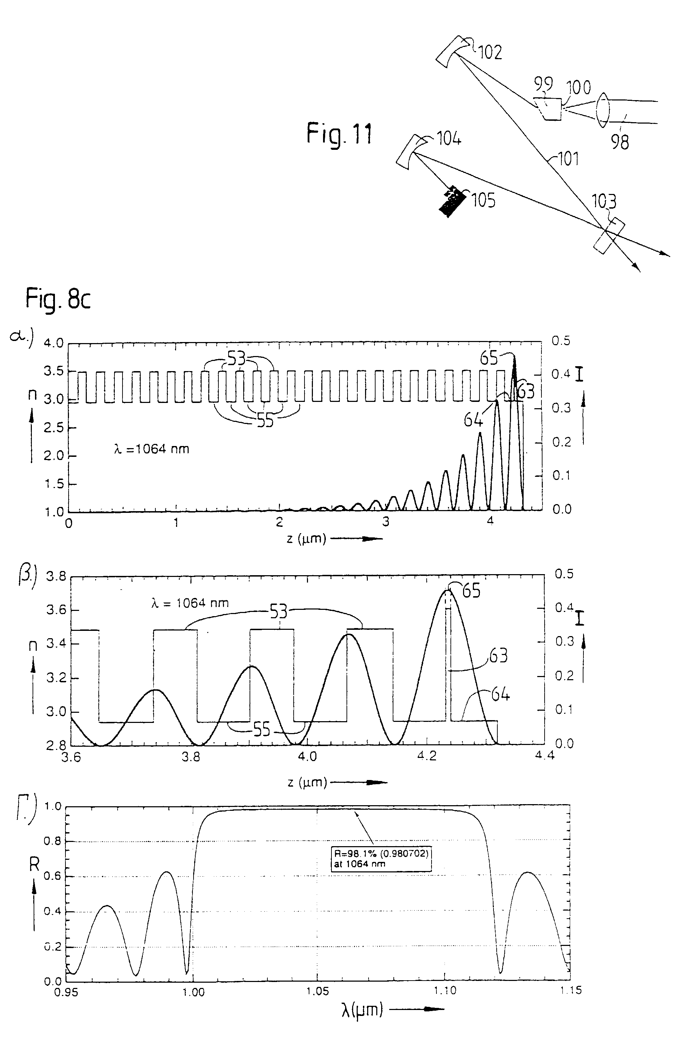

Eine hierzu weitere Beschichtungsvariante zeigt **Figur 8c**. Hier ist die absorbierende Schicht **63** ebenfalls in die oberste Schicht **64** eingelagert. In Gegensatz zu den obenbeschriebenen Beschichtungsensembles ist hier die oberste Schicht **64**, eine Schicht mit einem niedrigen Brechungsindex, nämlich n ≈ 2,95 aus AlAs. Die optische Schichtdicke entspricht einer Halbwellenlänge bezogen auf 1,064 µm. Die absorbierende Schicht **63** ist annähernd in einem der Intensitätsmaxima, hier im absoluten Intensitätsmaximum **65** angeordnet.

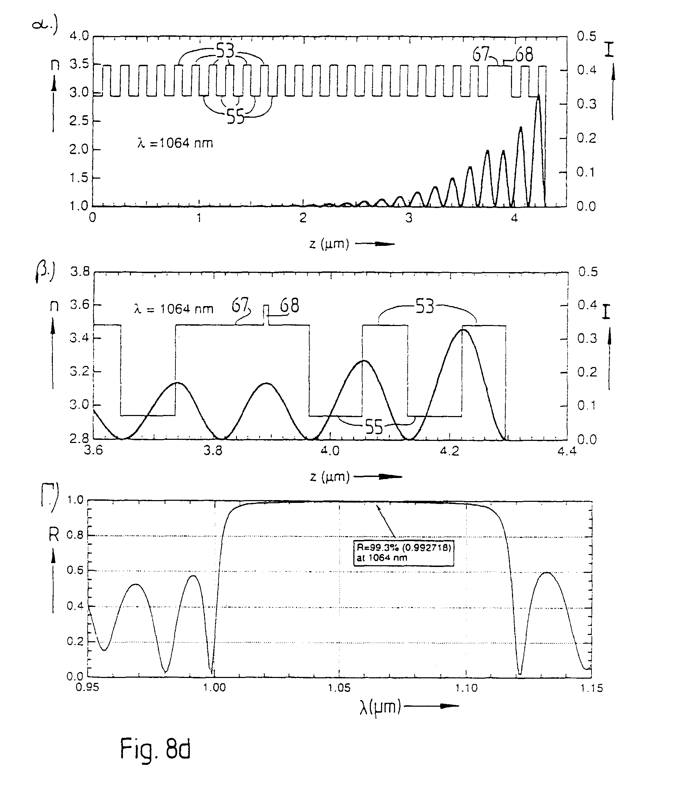

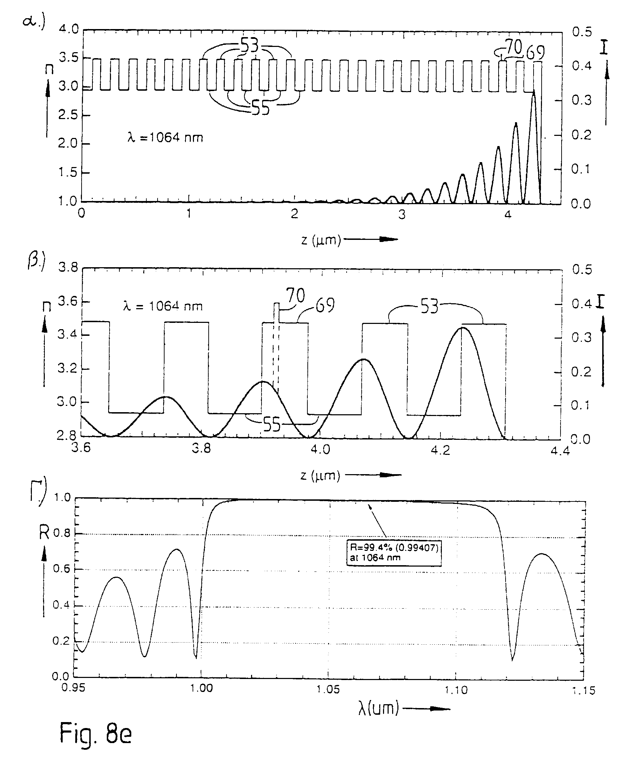

Weitere Varianten von Beschichtungsensembles zeigen die **Figuren 8d** und **8e**. Im Gegensatz zu den obenbeschriebenen ist nun die absorbierende Schicht **68** bzw. **70** nicht mehr in der obersten Schicht, sondern in einer tiefer liegenden, hier beispielsweise in der drittobersten Schicht **67** bzw. **69** eingebettet. In **Figur 8d** liegt die absorbierende Schicht **68** annähernd am Ort eines relativen Intensitätsmaximums. In **Figur 8e** hingegen liegt die absorbierende Schicht **70** im abfallenden Teil nach einem relativen Intensitätsmaximum.

Die **Figuren 8a** bis **8e** zeigen eine Weg auf, wie die optimale Lage des sättigbaren Absorbers in dem Beschichtungsensemble gefunden werden kann. Bei einer sorgfältigen Auswahl der Absorberlage kann eine gewünschte Breitbandigkeit in bezug auf den gewünschten Wellenlängenbereich erzielt werden. In den dargestellten Beispielen ist ein Bereich von 50 nm erreicht worden. Ferner ist die effektive, d.h. von "außen gesehene" Sättigungsintensität im Beschichtungsensemble z. B. erhöhbar, wenn der Absorber tiefer eingebettet wird, wie diese beispielsweise **Figur 8d** zeigt.

**Figur 9** zeigt ein breitbandiges Beschichtungsensemble mit einem sättigbaren Absorber analog zu den oben genannten Ausführungen für die Erzeugung gepulster Laserstrahlung mit Pulsbreiten im 10-fs-Bereich [fs ≡ Femtosekunde (1 fs = $10^{-15}$ Sekunden)] in einem nicht dargestellten Laserresonator. Als aktives Lasermaterial wird ein (nicht dargestellter) Ti:Saphir-Laser-Kristall mit einer Dicke von 2 mm verwendet. Die Resonatorspiegel sind in einem gegenseitigen Abstand von 10 cm angeordnet, wodurch der Laserstrahldurchmesser in der unten beschriebenen absorbierenden Schicht 36 µm beträgt. Der (nicht dargestellte) Auskoppelspiegel (einer der beiden Resonatorspiegel) koppelt 3% der Laserintensität aus dem Laserresonator aus. Die in den **Figuren 9b** und **9c** gezeigten Beschichtungsensembles zur Verwendung in dem obenerwähnten, nicht dargestellten Laserresonator weisen im Gegensatz zu den Beschichtungsensembles der **Figuren 1, 4** und **8a** bis **8e** eine metallische Schicht, hier eine Silberschicht auf. Es können jedoch auch andere Metallschichten, wie beispielsweise Goldschichten vorhanden sein.

Entgegen einem üblichen Beschichtungsverfahren ist hier ein neues, sich grundsätzlich von den bereits bekannten unterscheidendes Herstellungsverfahren verwendet worden. Bei diesem Verfahren wird nämlich, wie unten beschrieben, die zu unterst liegende Metallschicht als letzte hergestellt. D. h. der Schichtenauftrag erfolgt in einer umgekehrten Reihenfolge.

Zur Herstellung des in **Figur 9b** dargestellten Beschichtungsensembles wird, wie in **Figur 9a** angedeutet, zuerst auf einem GaAs-Substrat **71** eine 300 nm dicke $Al_xGa_{1-x}As$-Schicht **72** mit x=0,65 aufgebracht. Auf diese Schicht **72** wird dann eine 40 nm dicke GaAs-Schicht **73** aufgebracht. Es folgt nun eine weitere 20 nm dicke Schicht **74** aus $Al_xGa_{1-x}As$-Schicht **72** mit x=0,65. Auf die Schicht **74** wird in einem Tieftemperaturverfahren (400°C) eine 15 nm dicke GaAs-Absorber-Schicht **75** aufgebracht, dann folgt eine 70 nm dicke AlAs-Schicht **76** und eine 3 nm dicke GaAs-Schicht **77**, welche später eine Oxidation der Schicht **76** vermeiden soll. Auf die Schicht **77** kommt dann eine 5 µm dicke Silberschicht **78**.

Nach diesem Beschichtungsverfahren wird das beschichtete Substrat 71 in etwa 5 mm x 5 mm große Stücke zerteilt. Diese Stücke werden dann mit einem Zweikomponentenepoxydkleber **79** auf einem Siliziumsubstrat 80 aufgeklebt, um eine ausreichende Wärmeableitung zu erhalten. Die Stücke werden in einem nächsten Verfahrensschritt bei 80°C acht Stunden lang unter einem Oberflächengewicht von 500 g belastet wärmebehandelt. Als nächstes wird das GaAs-Substrat **71** auf 100 µm heruntergeläppt und mit in Wasserstoffperoxid [$NH_4OH:H_2O_2$ (1:25)] gelösten Ammoniak mit einer Ätzgeschwindigkeit bei Raumtemperatur von etwa 6 µm pro Minute bis zur Schicht **72** geätzt. Die Schicht **72** wird anschließend mit Flußsäure bis zur Schicht **73** entfernt. Die Schicht 73 wird analog zur Schicht **71** mit in Wasserstoffperoxid [$NH_4OH:H_2O_2$ (1:200)] gelösten Ammoniak geringerer Konzentration weggeätzt. Für eine gute gleichmäßige Ätzung müssen die 5 mm x 5 mm großen Stücke bewegt werden. Zum Schutz der Ecken und der Silberschicht **78** wird während des Ätzvorgangs ein Wachsauftrag verwendet. Die Wachsschutzschicht kann später mit Trichloethylen entfernt werden. Durch die Ätzung sind die für die Herstellung der Beschichtungsensembles notwendigen Schichten, jedoch optisch nicht verwendbaren Schichten entfernt worden. Die oberste Schicht ist nun die Schicht **74**.

Das in **Figur 9c** abgebildete Beschichtungsensemble ist analog zu demjenigen in **Figur 9b** hergestellt worden. Die Schichten **83, 84, 85** und **86** entsprechen den Schichten **78, 77, 76** und **75** des Beschichtungsensembles der **Figur 9b**. Im Gegensatz zu demjenigen in **Figur 9b** ist jedoch hier eine 82 nm dicke AlGaAs-Schicht **87** vorhanden, auf der eine Antireflexbeschichtung **89** mit Schutzschicht **90** sitzt. In den **Figuren 9b** und **9c** ist jeweils der örtliche Verlauf der Intensität mit dem Bezugszeichen **91a** bzw. **91b** eingezeichnet.

Das in **Figur 9b** dargestellte Beschichtungsensemble arbeitet im (nicht dargestellten) Laserresonator mit geringer Güte in Antiresonanz. Hierdurch wird eine ultrakurze Pulsbreitenbegrenzung (ultrashort-pulse-width limitation), hervorgerufen durch eine vergrößerte Wellenlängen abhängige Reflexionsänderung und eine vergrößerte Gruppengeschwindigkeitsdispersion, vermieden [siehe beispielsweise L.R.Brovelli, U. Keller, T.H.Chiu, J.Opt.Soc.Am. B 12, 311 (1995)]. Die Reflexion des Beschichtungsensembles ist größer 94% bei 800 nm. Der Reflexionsverlauf zeigt nur eine geringe Wellenlängenabhängigkeit im Bereich zwischen 700 nm und 1200 nm.

Anstelle in Antiresonanz zu arbeiten, kann auch mit dem in **Figur 9c** dargestellten Beschichtungsensemble in Resonanz gearbeitet werden.

Ein Beispiel für ein Beschichtungsensemble mit III-V-Halbleiter- und Fluoridschichten zeigt für eine Laserwellenlänge von 1,4 μm **Figur 10**. Es sind hier drei je 220 nm dicke Schichten **94a** bis **94c** aus $BaF_2$ vorn und hinten (sandwichartig) mit jeweils 10 nm dicken einer $CaF_2$-Schicht **93a** bis **93c** versehen. Zwischen diesen "Sandwiches" ist jeweils eine GaAs-Viertelwellenschicht **97a** bis **97c** (100 nm Schichtdicke) angeordnet. Auf einem GaAs-Substrat **96** ist in einem Beschichtungsprozess eine Schicht aus GaAs **95** aufgebacht. Die Schicht **95** dient nur dazu ein gutes Halten und Aufwachsen für die nachfolgenden Schichten zu ermöglichen.

Der Brechungsindexunterschied zwischen $CaF_2$ und $BaF_2$ ist gering, jedoch hat $BaF_2$ eine große Elastizitätskonstante, was die Ausbildung von Rissen in der Beschichtung während des Abkühlvorgangs stark verringert. Auch auf bzw. in diesem Beschichtungsensemble können Schichten mit sättigbarem Absorber integriert werden. Für kürzere Wellenlängen wird bevorzugt anstelle von GaAs, AlGaAs verwendet; GaAs zeigt Absortion unter 900 nm.

Die obenbeschriebenen Beschichtungsensembles mit Schichten aus GaAs/AlAs oder AlGaAs/AlAs weisen im Gegensatz zu denjenigen mit $CaF_2$ und $BaF_2$ für einen Ti-Saphir-Laser eine etwas zu kleine Bandbreite auf, um dessen Bandbreite voll ausnützen zu können. Für einen breitbandigen Ti-Saphir-Laser wird man demzufolge auf ein Beschichtungsensemble mit $CaF_2$ und $BaF_2$ zurückgreifen. Gegenüber dem obenbeschriebenen Beschichtungsensemble mit Metallschicht besteht hier der Vorteil in einem epitaktischen Aufeinanderaufwachsen der Schichten.

Als Halbleitermaterialien können beispielsweise GaAs, AlGaAs, InGaAs, GaInP, GaInAsP usw. und als Fluoride $CaF_2$, $BaF_2$, $SrF_2$, ... verwendet werden.

Neben den in den **Figuren 5** und **7** dargestellten Resonatorkonfigurationen können auch noch andere verwendet werden. Der in **Figur 11** dargestellte Resonator hat einen Laserkristall **99**, durch dessen eines für die Laserwellenlänge verspiegeltes Ende **100** hindurch gepumpt wird. Die mit dem Laserkristall **99** erzeugte Resonatorwelle **101** wird über die Umlenkspiegel **102, 103** und **104** umgelenkt. Der Laserkristall **99** wird mit dem Pumplichtstrahl **98** optisch gepumpt. Der sättigbare Absorber mit einem der obenbeschriebenen Beschichtungsensembles ist als Resonatorendspiegel **105** angeordnet. Die Laserstrahlung wird am Umlenkspiegel **103** ausgekoppelt.

Der Laserresonator gemäß **Figur 12** hat ebenfalls einen sättigbaren Absorber in einem der obenbeschriebenen Beschichtungsensembles. Das Beschichtungsensemble **107** ist in den Resonatorendspiegel integriert. Ferner hat der Resonator einen Endspiegel **112** und vier Umlenkspiegel **108** bis **111**, wobei das Element **110** gleichzeitig aktives Medium (Laserkristall) und Spiegel in einem ist. Laserenergie wird über den Endspiegel **112** teilweise ausgekoppelt. Das optische Pumpen des Laserkristalls **110** erfolgt über den Pumplichtstrahl **114**.

Einen miniaturisierten Laserresonator zur Erzeugung kurzer Pulse analog den bereits obenbeschriebenen Resonatoren, zeigt **Figur 13**. Auf einem Montageplättchen **113** ist ein Beschichtungsensemble **115** mit sättigbarem Absorber gemäß einer der obengenannten Ausführungen als Resonatorendspiegel aufgebracht. Direkt auf diesem Beschichtungsensemble **115** ist der Laserkristall **117** aufgesetzt. (Es könnte aber auch der Kristall an der mit **116** gekennzeichneten Stelle mit dem Beschichtungsensemble versehen sein.) Die Dicke von etwa 200 μm des Laserkristalls **117** plus die "Eindringtiefe" der Strahlung in das Beschichtungsensemble bestimmen die Resonatorlänge. Direkt auf der dem Ensemble **115** gegenüberliegenden Seite des Laserkristalls **117** ist der Auskoppelspiegel **119** mit entsprechender Beschichtung für den auszukoppelnden Laserstrahl **121** und für eine Einkopplung des Pumplichtstrahls **122** angeordnet. Laserstrahl **121** und Pumplichtstrahl **122** werden durch einen entsprechend beschichteten Strahlteiler **123** voneinander getrennt.

**Patentansprüche**

1. Verfahren zur Herstellung einer optischen Komponente mit vorgegebenem Reflexionsfaktor für eine Laserstrahlung, bevorzugt verwendbar für die Erzeugung kurzer Laserpulse in einem Laserresonator, wobei zuerst ein Aufbau eines auf der Substratoberfläche der Komponente aufzubringenden Beschichtungsensembles **(1; 42; 53, 55, 56, 57; 53, 55, 60, 61; 53, 55, 63, 64; 53, 55, 67, 68; 53, 55, 60, 70; 115)** bestimmt wird, in dem dieses bestehend aus ersten und zweiten Schichten **(11, 13; 33, 34; 53, 55; 73, 74)** und wenigstens einer dritten, ein sättigbar absorbierendes Halbleitermaterial für die Laserstrahlung enthaltenden Schicht **(6, 39, 57, 61, 63, 68, 70, 75)** zusammengestellt wird, die Schichtdicken und Orte der ersten und zweiten sowie der dritten das sättigbar absorbierende Material enthaltenden Schicht bzw. Schichten rechnerisch derart bestimmt werden, daß der vorgegebene Reflexionsfaktor mit auf der Oberfläche sich befindendem Ensemble **(1; 42; 53, 55, 56, 57; 53, 55, 60, 61; 53, 55, 63, 64; 53, 55, 67, 68; 53, 55, 60, 70; 115)** und in jeder dritten Schicht ein vorgegebener normierter Strahlungsintensitätswert für die einzustrahlende Laserstrahlung erhalten werden bzw. wird, wobei jeder Strahlungsintensitätswert derart gewählt ist, daß er die gewünschte sättigbar absorbierende Wirkung zur Erzeugung der kurzen Pulse in einem Laserresonator **(20, 23, 24a, 24b, 25a, 25b; 43, 45, 47, 50a, 50b; 100, 99, 102, 103, 104, 105; 107, 108, 109, 110, 111, 112; 115, 117, 119)** hervorruft, und nach dieser Berechnung auf der Oberfläche der Komponente das Beschichtungsensemble **(1; 42; 53, 55, 56, 57; 53, 55, 60, 61; 53, 55, 63, 64; 53, 55, 67, 68; 53, 55, 60, 70; 115)** entsprechend des bestimmten Aufbaus aufgebracht wird.

2. Verfahren nach Anspruch 1, **dadurch gekennzeichnet,** daß der Reflexionsfaktor des Beschichtungsensembles **(1; 42; 53, 55, 56 57; 53,55,60,61; 53, 55, 63, 64; 53, 55, 67, 68; 53, 55, 60, 70; 115)** derart vorgegeben wird, daß das Beschichtungsensemble die Komponente antireflektierend als optische Vergütung für die Laserstrahlung macht bzw. totalreflektierend, wodurch die Komponente dann beispielsweise als Resonatorspiegel einsetzbar ist.

3. Verfahren nach Anspruch 1 oder 2, **dadurch gekennzeichnet,** daß wenigstens eine der dritten Schichten **(6, 39, 57, 61, 63, 68, 70)** am Ort bzw. an den Orten im Beschichtungsensemble angeordnet ist, an dem bzw. an denen sich rechnerisch ein hoher Strahlungsintensitätsgradient ergeben hat, um eine hohe Absorptionsänderung in wenigstens einem Frequenzteilbereich der Resonatorstrahlung zu erhalten.

4. Verfahren nach einem der Ansprüche 1 bis 3, **dadurch gekennzeichnet**, daß als Material für die Schichten des Beschichtungsensembles **(1; 42; 53, 55, 56, 57; 53, 55, 60, 61; 53, 55, 63, 64; 53, 55, 67, 68; 53, 55, 60, 70; 115)** Halbleitermaterialien ausgewählt werden, welche bevorzugt Arsen, insbesondere ein Metall oder in einer besonderen Ausführungsform wenigstens ein Fluorid als wesentlichen Verbindungspartner enthalten und als Material für jede dritte Schicht bevorzugt ein Halbleitermaterial vorgegeben wird, insbesondere Galliumarsenid, Galliumaluminiumarsenid oder Galliumindiumarsenid.

5. Verfahren nach einem der Ansprüche 1 bis 4, **dadurch gekennzeichnet**, daß die Schichtenfolge des Beschichtungsensembles derart vorgegeben wird, daß für eine einfallende Laserstrahlung sich eine negative Dispersion der Gruppengeschwindigkeit ergibt.

6. Verfahren nach Anspruch 5, **dadurch gekennzeichnet**, daß wenigstens in einem Teil der Schichten des Beschichtungsensembles **(1; 42; 53, 55, 56, 57; 53, 55, 60, 61; 53, 55, 63, 64; 53, 55, 67, 68; 53, 55, 60, 70; 115)** als Material ein Halbleitermaterial mit einem Prozentanteil Aluminium vorgegeben wird, wobei der Aluminiumanteil entsprechend der zu erwartenden Mittenfrequenz der Resonatorstrahlung derart vorgegeben wird, daß in der bzw. den zur sättigbaren Absorption vorgesehenen Schicht bzw. Schichten eine sättigbare Absorption zusammen mit der geforderten negativen Gruppengeschwindigkeitsdispersion zur Erzeugung extrem kurzer modegelockter Pulse erzeugbar ist.

7. Laser zur Erzeugung kurzer Pulse, insbesondere im Mikro- bis Femtosekunden-Bereich, **dadurch gekennzeichnet**, daß wenigstens eine optische Komponente im Laserresonator **(20, 23, 24a, 24b, 25a, 25b; 43, 45, 47, 50a, 50b; 100, 99, 102, 103, 104, 105; 107, 108, 109, 110, 111, 112; 115, 117, 119)** mit einem auf der Komponentenoberfläche aufgebrachten optischen Beschichtungsensemble **(1; 42; 53, 55, 56, 57; 53, 55, 60, 61; 53, 55, 63, 64; 53, 55, 67, 68; 53, 55, 60, 70; 115)** mit ersten und zweiten optischen Schichten und wenigstens einer dritten Halbleitermaterialschicht ausgebildet ist, wobei benachbarte erste und zweite Schichten **(11, 13; 33, 34; 53, 55; 73, 74)** einen unterschiedlichen optischen Brechungsindex haben und jede dritte Schicht **(6, 39, 57, 61, 63, 68, 70, 75)** ein sättigbar absorbierendes Material für die Wellenlänge der Laserstrahlung hat, wobei erste, zweite und dritte Schichten zusammen in phasengekoppelter Weise durch ihre Anordnung und ihre Schichtdicken derart angeordnet sind, daß die Komponente einen vorgegebenen Reflexionsfaktor für die Strahlung bei deren Einfall hat und die dritte Schicht an einem Ort bzw. die dritten Schichten **(6, 39, 57, 61, 63, 68, 70, 75)** an Orten im Ensemble **(1; 42; 53, 55, 56, 57; 53, 55, 60, 61; 53, 55, 63, 64; 53, 55, 67, 68; 53, 55, 60, 70; 115)** angeordnet ist bzw. sind, an dem bzw. denen eine vorgegebene normierte Intensität beim Einfall der Strahlung auf die Komponente sich ergibt.

8. Laser nach Anspruch 7, **dadurch gekennzeichnet**, daß das Beschichtungsensemble **(1; 42; 53, 55, 56, 57; 53, 55, 60, 61; 53, 55, 63, 64; 53, 55, 67, 68; 53, 55, 60, 70; 115)** der wenigstens einen optischen Komponente derart ausgebildet ist, daß die Laserstrahlung mit der vorgegebenen Wellenlänge nicht reflektierbar ist.

**9.** Laser nach Anspruch 7, **dadurch gekennzeichnet**, daß das Beschichtungsensemble **(1; 42; 53, 55, 56, 57; 53, 55, 60, 61; 53, 55, 63, 64; 53, 55, 67, 68; 53, 55, 60, 70; 115)** der wenigstens einen Komponente derart ausgebildet ist, daß die Laserstrahlung mit der vorgegebenen Wellenlänge vollständig reflektierbar ist, wodurch die Komponente als Resonatorspiegel verwendbar ist.

**10.** Laser nach einem der Ansprüche 7 bis 9, **dadurch gekennzeichnet**, daß die Schichten des Beschichtungsensembles **(1; 42; 53, 55, 56, 57; 53, 55, 60, 61; 53, 55, 63, 64; 53, 55, 67, 68; 53, 55, 60, 70; 115)** der wenigstens einen optischen Komponente im wesentlichen aus Halbleitermaterialien bestehen, welche bevorzugt Arsen, insbesondere ein Metall oder in einer besonderen Ausführungsform wenigstens ein Fluorid als wesentlichen Verbindungspartner enthalten und jede dritte Schicht bevorzugt Galliumarsenid, Galliumaluminiumarsenid oder Galliumindiumarsenid ist.

**11.** Laser nach einem der Ansprüche 7 bis 10, **dadurch gekennzeichnet**, daß wenigstens ein Teil der Schichten des Beschichtungsensembles **(1; 42; 53, 55, 56, 57; 53, 55, 60, 61; 53, 55, 63, 64; 53, 55, 67, 68; 53, 55, 60, 70; 115)** der wenigstens einen optischen Komponente als Material ein Halbleitermaterial mit einem Prozentsatz Aluminium hat, wobei der Aluminiumanteil entsprechend der zu erwartenden Mittenfrequenz der Resonatorstrahlung derart vorgegeben ist, daß in der dritten Schicht bzw. in den dritten Schichten eine sättigbare Absorption zusammen mit der geforderten negativen Gruppengeschwindigkeitsdispersion für die vorgegebene Laserstrahlung erreichbar ist, um extrem kurze modegelockte Pulse erzeugen zu können.

## Claims

**1.** A process for the manufacture of an optical component having a specified reflection factor for laser radiation, preferably usable for the generation of short laser pulses in a laser resonator, wherein first a structure of a coating ensemble (1; 42; 53, 55, 56, 57; 53, 55, 60, 61; 53, 55, 63, 64; 53, 55, 67, 68 ; 53, 55, 60, 70; 115) to be applied to the substrate surface of the component is determined, in which the coating ensemble consisting of first and second layers (11, 13; 33, 34; 53, 55; 73, 74) and at least one third layer (6, 39, 57, 61, 63, 68, 70, 75) which contains a saturably absorbing semiconductor material for the laser radiation is assembled, the layer thicknesses and locations of the first and second layers and of the third layer(s) which contain(s) the saturably absorbing material are so determined by calculation that the specified reflection factor is obtained when the ensemble (1; 42; 53, 55, 56, 57; 53, 55, 60, 61; 53, 55, 63, 64; 53, 55, 67, 68 ; 53, 55, 60, 70; 115) is located on the surface and a specified standardised radiation intensity value for the laser radiation to be beamed in is obtained in each third layer, each radiation intensity value being so selected that it produces the desired saturably absorbing effect for the generation of the short pulses in a laser resonator (20, 23, 24a, 24b, 25a, 25b; 43, 45, 47, 50a, 50b; 100, 99, 102, 103, 104, 105; 107, 108, 109, 110, 111, 112; 115, 117, 119), and, after that calculation, the coating ensemble (1; 42; 53, 55, 56, 57; 53, 55, 60, 61; 53, 55, 63, 64; 53, 55, 67, 68; 53, 55, 60, 70; 115) is applied to the surface of the component in accordance with the structure determined.

**2.** A process according to claim 1, characterised in that the reflection factor of the coating ensemble (1; 42; 53, 55, 56, 57; 53, 55, 60, 61; 53, 55, 63, 64; 53, 55, 67, 68 ; 53, 55, 60, 70; 115) is so specified that the coating ensemble makes the component anti-reflective as an optical coating for the laser radiation, or makes it totally reflective, whereby the component can then be used, for example, as a cavity mirror.

**3.** A process according to claim 1 or claim 2, characterised in that at least one of the third layers (6, 39, 57, 61, 63, 68, 70) is arranged at the location(s) in the coating ensemble at which, by calculation, a high radiation intensity gradient has been produced, in order to obtain a high absorption change in at least one frequency sub-range of the resonator radiation.

**4.** A process according to any one of claims 1 to 3, characterised in that semiconductor materials containing preferably arsenic, especially a metal or, in a special embodiment, at least one fluoride as the principal compound partner are selected as the material for the layers of the coating ensemble (1; 42; 53, 55, 56, 57; 53, 55, 60, 61; 53, 55, 63, 64; 53, 55, 67, 68 ; 53, 55, 60, 70; 115), and preferably a semiconductor material, especially gallium arsenide, gallium aluminium arsenide or gallium indium arsenide, is specified as the material for each third layer.

**5.** A process according to any one of claims 1 to 4, characterised in that the layer sequence of the coating ensemble is specified in such a manner that a negative dispersion of the group velocity is obtained for incident laser radiation.

6. A process according to claim 5, characterised in that at least in some of the layers of the coating ensemble (1; 42; 53, 55, 56, 57; 53, 55, 60, 61; 53, 55, 63, 64; 53, 55, 67, 68 ; 53, 55, 60, 70; 115) a semiconductor material having a percentage proportion of aluminium is selected as the material, the proportion of aluminium being so specified according to the expected centre frequency of the resonator radiation that, in the layer(s) provided for the saturable absorption, a saturable absorption can be produced together with the required negative group velocity dispersion for the generation of extremely short mode-locked pulses.

7. A laser for generating short pulses, especially in the microsecond to femtosecond range, characterised in that at least one optical component in the laser resonator (20, 23, 24a, 24b, 25a, 25b; 43, 45, 47, 50a, 50b; 100, 99, 102, 103, 104, 105; 107, 108, 109, 110, 111, 112; 115, 117, 119) is constructed with an optical coating ensemble (1; 42; 53, 55, 56, 57; 53, 55, 60, 61; 53, 55, 63, 64; 53, 55, 67, 68; 53, 55, 60, 70; 115) applied to the surface of the component and having first and second optical layers and at least one third semiconductor material layer, wherein adjacent first and second layers (11, 13; 33, 34; 53, 55; 73, 74) have a differing optical refractive index and each third layer (6, 39, 57, 61, 63, 68, 70, 75) has a saturably absorbing material for the wavelength of the laser radiation, wherein first, second and third layers are so arranged together, in phase-coupled manner by their arrangement and their layer thicknesses, that the component has a specified reflection factor for the radiation upon incidence thereof and the third layer(s) (6, 39, 57, 61, 63, 68, 70, 75) is(are) arranged at (a) location(s) in the ensemble (1; 42; 53, 55, 56, 57; 53, 55, 60, 61; 53, 55, 63, 64; 53, 55, 67, 68 ; 53, 55, 60, 70; 115) at which a specified standardised intensity is produced upon incidence of the radiation on the component.

8. A laser according to claim 7, characterised in that the coating ensemble (1; 42; 53, 55, 56, 57; 53, 55, 60, 61; 53, 55, 63, 64; 53, 55, 67, 68; 53, 55, 60, 70; 115) of the at least one optical component is constructed in such a manner that the laser radiation with the specified wavelength cannot be reflected.

9. A laser according to claim 7, characterised in that the coating ensemble (1; 42; 53, 55, 56, 57; 53, 55, 60, 61; 53, 55, 63, 64; 53, 55, 67, 68; 53, 55, 60, 70; 115) of the at least one component is constructed in such a manner that the laser radiation with the specified wavelength can be totally reflected, whereby the component can be used as a cavity mirror.

10. A laser according to any one of claims 7 to 9, characterised in that the layers of the coating ensemble (1; 42; 53, 55, 56, 57; 53, 55, 60, 61; 53, 55, 63, 64; 53, 55, 67, 68 ; 53, 55, 60, 70; 115) of the at least one optical component substantially consist of semiconductor materials containing preferably arsenic, especially a metal or, in a special embodiment, at least one fluoride as the principal compound partner and each third layer is preferably gallium arsenide, gallium aluminium arsenide or gallium indium arsenide.

11. A laser according to any one of claims 7 to 10, characterised in that at least some of the layers of the coating ensemble (1; 42; 53, 55, 56, 57; 53, 55, 60, 61; 53, 55, 63, 64; 53, 55, 67, 68; 53, 55, 60, 70; 115) of the at least one optical component have as the material a semiconductor material with a percentage of aluminium, the proportion of aluminium being so specified according to the expected centre frequency of the resonator radiation that, in the third layer(s), a saturable absorption can be obtained together with the required negative group velocity dispersion for the specified laser radiation in order to be able to generate extremely short mode-locked pulses.

## Revendications

1. Procédé pour la fabrication d'un composant optique avec un facteur de réflexion préétabli pour un rayonnement laser, de préférence utilisable pour la production de courte pulsion laser dans un résonateur laser, dans lequel il est d'abord déterminé une structure d'un ensemble de stratification sur la surface de substrat des composants (1; 42; 53, 55, 56, 57; 53, 55, 60, 61; 53, 55, 63, 64 ; 53, 55, 67, 68 ; 53, 55, 60, 70; 115, cet ensemble étant constitué par des premières et secondes couches (11, 13; 33, 34 ; 53, 55; 73, 74) et au moins une troisième couche contenant un matériau semiconducteur absorbant saturable pour le rayonnement laser (6, 39, 57, 61, 63, 68, 70, 75), les épaisseurs de couches et localisation des premières et secondes couches contenant le matériau absorbant saturable ainsi que de la troisième couche étant déterminée arithmétiquement, de sorte que le facteur de réflexion préétabli avec l'ensemble se trouvant sur la surface (1; 42 ; 53, 55, 56, 57; 53, 55, 60, 61; 53, 55, 63, 64 ; **53**, 55, 67, 68 ; 53, 55, 60, 70 ; 115) et dans chaque troisième couche on obtient une valeur d'intensité de rayonnement normalisée préétablie pour le rayonnement laser à émettre, chaque valeur d'intensité de rayonnement étant sélectionnée de telle sorte que l'effet absorbant saturable souhaité pour la production des pulsations courtes est produite dans un résonateur laser (20, 23, 24a, 24b, 25a, 25b ; 43, 45, 47, 50a, 50b; 100, 99, 102, 103, 104, 105;

107, 108, 109, 110, 111, 112; 115, 117, 119), et conformément à ce calcul, on applique sur la surface des composants l'ensemble de couches (1 ; 42; 53, 55, 56, 57 ; 53, 55, 60, 61; 53, 55, 63, 64 ; 53, 55, 67, 68 ; 53, 55, 60, 70; 115) correspondant à la structure déterminée.

2. Procédé selon la revendication 1, caractérisé en ce que le facteur de réflexion de l'ensemble de couches (1; 42; 53, 55, 56, 57 ; 53, 55, 60, 61; 53, 55, 63, 64 ; 53, 55, 67, 68 ; 53, 55, 60, 70 ; 115) est préétabli de telle sorte que l'ensemble de couches rend les composants antiréfléchissants comme compensation optique pour le rayonnement laser ou totalement réfléchissant, les composants pouvant alors être par exemple utilisés en tant que miroir de la cavité.

3. Procédé selon la revendication 1 ou 2, caractérisé en ce qu'au moins l'une des trois couches (6, 39, 57, 61, 63, 68, 70) est disposée sur l'emplacement ou sur les emplacements de l'ensemble de couches, ou il est produit arithmétiquement un gradiant d'intensité de rayonnement élevée pour obtenir une modification d'absorption élevée dans au moins un domaine partiel de fréquence du rayonnement du résonateur.

4. Procédé selon l'une des revendications 1 à 3, caractérisé en ce qu'en tant que matériau pour les couches de l'ensemble de couches (1; 42 ; 53, 55, 56, 57 ; 53, 55, 60, 61; 53, 55, 63, 64 ; 53, 55, 67, 68 ; 53, 55, 60, 70; 115) on a choisi des matériaux semiconducteurs, lesquels de préférence de l'arsenic, en particulier un métal ou dans une forme de réalisation particulière, au moins un fluorure en tant que partenaire de composition essentielle et en tant que matériau pour chaque troisième couche, un matériau à semiconducteur étant préféré, en particulier l'arséniure de gallium, l'arséniure de gallium aluminium ou un arséniure de gallium indium.

5. Procédé selon l'une des revendications 1 à 4, caractérisé en ce que la séquence de couches de l'ensemble de couches est préétabli de telle sorte que pour un rayonnement laser incident, on obtient une dispersion de la vitesse de groupe.

6. Procédé selon la revendication 5, caractérisé en ce qu'au moins dans une partie des couches de l'ensemble de couches (1; 42 ; 53, 55, 56, 57; 53, 55, 60, 61; 53, 55, 63, 64 ; 53, 55, 67, 68 ; 53, 55, 60, 70; 115) il est proposé comme matériau un matériau semiconducteur avec un pourcentage d'aluminium, la proportion d'aluminium étant préétablie de façon correspondante à la fréquence moyenne attendue du rayonnement du résonateur de sorte que dans la ou dans les couches prévues pour l'absorption saturable, on pourra produire une absorption saturable avec la vitesse de groupe négative requise pour la génération de pulsation en mode bloqué extrêmement courte.

7. Laser pour la production de courte pulsation, en particulier dans le domaine des micros jusqu'à Femto secondes, caractérisé en ce qu'au moins un composant optique est formé dans le résonateur laser (20, 23, 24a, 24b, 25a, 25b, 43, 45, 47, 50a, 50b; 100, 99, 102, 104, 105; 107, 108, 109, 110, 111, 112; 115, 117, 119) avec un ensemble de couches optiques appliquées sur la surface de composant (1; 42, 53, 55, 56, 57; 53, 55, 60, 61; 53, 55, 63, 64 ; 53, 55, 67, 68 ; 53, 55, 60, 70; 115), avec des premières et secondes couches optiques et au moins une troisième couche de matériau à semiconducteurs, les premières et deuxième couches avoisinantes (11, 13 ; 33, 34 ; 53, 55 ; 73, 74) ayant un indice de réfraction optique variable et chaque troisième couche (6, 39, 57, 61, 63, 68, 70, 75) ayant un matériau absorbant saturable pour la longueur d'ondes du rayonnement laser, de sorte que les premières, deuxièmes et troisièmes couches sont disposées conjointement de façon accouplée par phase par leur agencement et leur épaisseur de couches de telle sorte que le composant a un facteur de réflexion préétabli pour le rayonnement lors de l'incidence et la troisième couche ou les troisièmes couches et/ou sont disposés (6, 39, 57, 61, 63, 68, 70, 75) en des lieux dans l'ensemble (1 ; 42 ; 53, 55, 56, 57 ; 53, 55, 60, 61 ; 53, 55, 63, 64 ; 53, 55, 67, 68 ; 53, 55, 60, 70 ; 115) sur lesquels on obtient une intensité normalisée préétablie lors de l'incidence du rayonnement sur le composant.

8. Laser selon la revendication 7, caractérisé en ce que l'ensemble de couches (1 ; 42 ; 53, 55, 56, 57 ; 53, 55, 60, 61 ; 53, 55, 63, 64 ; 53, 55, 67, 68 ; 53, 55, 60, 70 ; 115) d'au moins un composant optique est formé de telle sorte que le rayonnement laser ne peut être réfléchi avec la longueur d'onde préétablie.

9. laser selon la revendication 7, caractérisé en ce que l'ensemble de couches (1 ; 42 ; 53, 55, 56; 57 ; 53, 55, 60, 61 ; 53, 55, 63, 64 ; 53, 55, 67, 68 ; 53, 55, 60, 70 ; 115) d'au moins un composant est formé de telle sorte que le rayonnement laser peut être réfléchi en totalité avec la longueur d'onde préétablie, le composant étant utilisable comme miroir de cavité.

10. Laser selon l'une des revendications 7 à 9, caractérisée en ce que les couches de l'ensemble de couches 1 ; 42;

53, 55, 56, 57; 53, 55, 60, 61; 53, 55, 63, 64 ; 53, 55, 67, 68 ; 53, 55, 60, 70; 115) d'au moins un composant optique sont pour l'essentiel constitués de matériaux semiconducteurs, qui contiennent de préférence de l'arsenic, en particulier un métal ou dans un mode de réalisation particulier au moins un fluorure en tant que partenaire de composition essentielle et chaque troisième couche est de préférence de l'arséniure de gallium, de l'arséniure de gallium aluminium ou un arséniure de gallium indium.

11. Laser selon une des revendication 7 à 10, caractérisé en ce qu'au moins une partie des couches de l'ensemble de couches (1; 42; 53, 55, 56, 57; 53, 55, 60, 61; 53, 55, 63, 64 ; 53, 55, 67, 68 ; 53, 55, 60, 70; 115) d'au moins un composant optique possède comme matériau un semiconducteur avec un pourcentage en aluminium, le pourcentage en aluminium étant prédéterminé de façon correspondante à la fréquence moyenne attendue du rayonnement de résonateur de sorte que dans la troisième couche ou dans les troisièmes couches, on pourra obtenir une absorption saturable conjointement avec la dispersion de vitesse de groupe négative requise pour le rayonnement laser préétabli afin de pouvoir générer des pulsations extrêmement courtes en mode bloqué.

Fig. 1

Fig. 3

Fig. 12

Fig. 7

Fig. 5

Fig. 2

Fig. 4

## Fig. 6

41 — Al$_{0,65}$Ga$_{0,35}$As 55nm
39 — Al$_{0,06}$Ga$_{0,94}$As 30nm
37 — AlAs 130nm — GaAs 10nm
38
33 — Al$_{0,15}$Ga$_{0,85}$As 59,4nm
AlAs 69,2nm 34
33
34
33
43 →
34
33
34
35 GaAs
42
3

## Fig. 9

a.)
80 79 78 73 72 71
z →
77 76 75 74

b.)
n
78 76 74
77 75
91a
z [μm] →
-0.1 0.0 0.1 0.2 0.3

c.)
n
84 86
83 85 87 89 90
91b
z [μm] →
-0.1 0.0 0.1 0.2 0.3

Fig. 8a

Fig.13

α.)

Fig.8b

β)

Γ.)

Fig.10

Fig. 11

Fig. 8c

Fig. 8d

Fig. 8e